# EUROPÄISCHE PATENTSCHRIFT

(11) **EP 0 485 803 B1**
(45) Veröffentlichungstag und Bekanntmachung des Hinweises auf die Patenterteilung: **01.05.1996**
(21) Anmeldenummer: 91118461.2
(22) Anmeldetag: 30.10.1991
(51) Int. Cl.: G02B 21/00, G02B 21/06, G01B 9/04

(54) **Optische Abtastvorrichtung mit konfokalem Strahlengang, in der Lichtquellen- und Detektormatrix verwendet werden**
Optical scanning device with confocal beam path using a light source array and a detector array
Dispositif de balayage optique avec trajet du faisceau confocal utilisant un réseau de sources de lumière et de détecteurs

(30) Priorität: 10.11.1990 DE 4035799; 12.12.1990 US 626678
(43) Veröffentlichungstag der Anmeldung: 20.05.1992
(73) Patentinhaber: Grosskopf, Rudolf, Dr.-Ing., D-89551 Königsbronn (DE)
(72) Erfinder: Knupfer, Klaus, Dr., W-7087 Essingen (DE); Derndinger, Eberhard, W-7080 Aalen (DE); Grosskopf, Rudolf, Dr., W-7923 Königsbronn (DE)

(56) Entgegenhaltungen:
- EP-A- 0 320 760
- US-A- 4 407 008
- US-A- 4 806 004
- PATENT ABSTRACTS OF JAPAN, Band 15, Nr. 207 (P-1207), 28. Mai 1991 ; & JP-A-30 55 510

## Beschreibung

Die vorliegende Erfindung betrifft eine Vorrichtung zur dreidimensionalen Untersuchung eines Objektes nach dem Oberbegriff des Anspruchs 1.

Eine Vorrichtung in Form eines konfokalen Scanning-Mikroskopes ist in einer Veröffentlichung von D. K. Hamilton e.a. (Appl. Phys. B 27, 211 (1982)) beschrieben. Scanning-Mikroskope mit konfokalem Strahlengang, bei dem eine sog. Punktlichtquelle in eine Ebene des Objektes und diese Ebene des Objektes auf einen sog. Punktempfänger bzw. eine Lochblende, hinter der ein Empfänger sitzt, abgebildet wird, haben die Eigenschaft sehr höhenselektiv zu sein, d.h. Ebenen, die nur einen geringen Abstand voneinander haben, optisch zu trennen. In der oben zitierten Veröffentlichung wird diese Eigenschaft dazu benutzt, ein Oberflächenprofil eines Halbleiterbauelementes aufzunehmen. Dafür wird für jede x-y-Lage des Lichtpunktes das Objekt in z-Richtung (Richtung der optischen Achse) bewegt und der Intensitätsverlauf gemessen. Da dieser ein ausgeprägtes Maximum hat, wenn das Bild des Lichtpunktes genau auf der Oberfläche liegt, kann für jeden Punkt in der x-y-Ebene die Höhe der Oberfläche in z-Richtung bestimmt werden und auf diese Weise zeitlich nacheinander das gesamte Oberflächenprofil des Objektes aufgenommen werden.

Ein Nachteil dieser bekannten Vorrichtung ist, daß die Aufnahme eines Oberflächenprofiles relativ viel Zeit erfordert, da zu jedem Zeitpunkt nur ein einzelner Objektpunkt abgetastet wird.

Desweiteren ist aus der US-A 4 407 008 ein konfokales Mikroskop bekannt, bei dem ein ein- oder zweidimensionales Lumineszenzdiodenarray in die Objektebene abgebildet wird. Das an der Objektoberfläche gestreute oder reflektierte Licht wird dann auf ein ein- oder zweidimensionales Detektordiodenarray abgebildet. Dieses Mikroskop ermöglicht zwar die Abtastung des Objektes ohne den Lichtstrahl mechanisch auszulenken oder das Objekt zu verschieben. Jedoch wird auch hier nur ein einziger kleiner Bereich des Objektes in jedem Zeitpunkt beleuchtet, so daß wiederum für die Aufnahme eines Oberflächenprofils relativ viel Zeit erforderlich ist.

Der vorliegenden Erfindung liegt die Aufgabe zugrunde, eine Vorrichtung zu schaffen, mit der in relativ kurzer Zeit dreidimensionale optische Untersuchungen durchgeführt werden können.

Die gestellte Aufgabe wird erfindungsgemäß durch eine Vorrichtung mit den Merkmalen der Ansprüche 1 oder 2 gelöst.

Bei der erfindungsgemäßen Vorrichtung erzeugt das Beleuchtungsraster gleichzeitig eine Vielzahl getrennter Leuchtflekken in der Fokusebene, so daß gleichzeitig eine entsprechend große Anzahl an Objektpunkten vermessen werden kann. Der Abstand der Leuchtflecken untereinander, d.h. das Beleuchtungsrastermaß, entspricht etwa dem 2 bis 10-fachen ihrer Durchmesser. Dieses Beleuchtungsrastermaß ist entweder derart auf das Detektorraster abgebildet, daß das Abbild des Beleuchtungsrastermaßes größer ist als das Detektorrastermaß, oder das Detektorraster ist größer als die Durchmesser bzw. Kantenlängen der lichtempfindlichen Flächen der einzelnen Detektorelemente. In beiden alternativen Ausführungsformen stellt das Detektorraster gleichzeitig Detektor und konfokales Raster dar. Im ersten Fall wirken die Detektorelemente, die für ein ebenes Objekt in der Fokusebene zwischen dem Abbild des Beleuchtungsrasters liegen, als Blende, indem die Ausgangssignale dieser Detektoren bei der Auswertung nicht berücksichtigt werden. Im zweiten Fall wirken die lichtunempfindlichen Bereiche zwischen den Detektorelementen als konfokale Blende.

Es hat sich gezeigt, daß als Detektorraster handelsübliche CCD-Empfänger bestens geeignet sind. Es kann dann die allgemeine nachteilige Eigenschaft dieser Sensoren genutzt werden, daß nur ein kleiner Anteil der Empfängerfläche aus lichtempfindlichen Bereichen besteht. Der Abstand der einzelnen Detektorelemente beträgt etwa das 5 - 6-fache ihrer Durchmesser.

Die Verwendung eines CCD-Empfängers und eines zweidimensionalen Arrays von Löchern in einer beleu hteten Schicht ist für ein Scanning-Mikroskop aus der US-A 4 806 004 bekannt. Dort ist jedoch nur angegeben, daß das Objekt in verschiedenen Schichtebenen beobachtet werden kann. Vor allem wird dort die Blendenwirkung des CCD-Empfängers nicht ausgenutzt, d.h. die Tatsache, daß er aus rasterförmig angeordneten lichtempfindlichen Bereichen besteht, deren Abmessungen erheblich kleiner sind als ihre Abstände voneinander.

In dem oben angegebenen US-Patent ist der konfokale Strahlengang vielmehr nur bei einem Auflichtmikroskop verwirklicht, bei welchem die zum Objekt gehenden Strahlenbündel durch dasselbe Löcherarray gehen wie die vom Objekt reflektierten Strahlenbündel. Daher ist es notwendig, durch ein als Okular bezeichnetes optisches Element das Löcher-Array in eine Ebene abzubilden, in der es beobachtet oder aufgenommen wird. Für den letzten Fall ist unter anderem eine Video-Kamera mit einem CCD-Empfänger angegeben, deren Bilder gespeichert und ausgewertet werden können.

Bei der vorliegenden Erfindung wird dagegen gerade die rasterförmige Anordnung der Detektorelemente des Detektorrasters benutzt.

Gegenüber der eingangs zitierten Veröffentlichung von Hamilton und dem aus der US-PS 4 407 008 bekannten Mikroskop hat die erfindungsgemäße Lösung nicht nur den Vorteil, daß die Aufnahme eines Oberflächenprofiles infolge der gleichzeitigen Ausleuchtung mehrerer Objektpunkte wesentlich schneller geht, sondern daß auch unmittelbar eine höhenselektive Betrachtung möglich ist, da durch den konfokalen Strahlengang die Intensität der von den einzelnen Objektstellen reflektierten Strahlungen unmittelbar von den Höhen der betreffenden Stellen des Objektes abhängt, so daß jedes Rasterelement eine Information über die Höhe der Oberfläche an der zu ihm gehörenden Stelle des Objektes gibt und damit die Intensitätsverteilung über der Oberfläche unmittelbar einen Überblick über die Höhenverteilung der Objektoberfläche gibt. Insbesondere lassen sich dadurch, wenn das Objekt relativ zum Strahlengang in Richtung der optischen Achse bewegt wird, sehr einfach die Bereiche mit gleicher Höhe der Oberfläche feststellen.

Bei Objekten mit reflektierenden Bereichen in oder unter einer transparenten Schicht ergeben sich für die Abhängigkeit der Intensität von der Höhe im Objekt Reflexionsprofile mit einem kleinen Maximum für die Oberfläche der transparenten Schicht und einem großen Maximum für den reflektierenden Bereich. Daher ist es mit der erfindungsgemäßen Vorrichtung möglich, nicht nur Oberflächenprofile zu untersuchen, sondern auch Strukturen innerhalb oder unter transparenten Schichten.

In einer vorteilhaften, einfachen Ausführungsform der Erfindung wird das Beleuchtungsraster durch Löcher in einer Schicht realisiert, die durch eine Lichtquelle beleuchtet wird. Um eine größere Intensität der beleuchteten Löcher - im Folgenden auch kurz als Lichtpunkte bezeichnet - zu erreichten, kann vor der Schicht mit den Löchern ein Linsen-Array angeordnet werden, welches dafür sorgt, daß die Strahlung der Lichtquelle die Schicht nicht gleichmäßig ausleuchtet sondern auf die Löcher konzentriert wird.

Normalerweise werden der CCD-Empfänger und das Beleuchtungsraster zueinander so justiert, daß die in die Ebene des Detektorrasters abgebildeten Lichtpunkte auf lichtempfindliche Bereiche des CCD-Empfängers fallen. In diesem Fall entstehen beim Durchfokussieren Intensitätsmaxima für diejenigen Objektstellen deren reflektierende Flächen genau in der Fokusebene liegen.

Es ist jedoch auch möglich, den CCD-Empfänger und das Beleuchtungsraster zueinander so zu justieren, daß die in die Ebene des CCD-Empfängers abgebildeten Lichtpunkte zwischen die lichtempfindlichen Bereiche des CCD-Empfängers fallen. In diesem Fall entstehen beim Durchfokussieren Intensitätsminima für diejenigen Objektstellen deren reflektierende Flächen genau in der Fokusebene liegen. Durch eine besondere Ausbildung des CCD-Empfängers, z.B. durch relativ kleinflächige lichtunempfindliche Bereiche zwischen den Pixeln, kann dieser Effekt noch verstärkt werden.

Schließlich ist auch ein inverses Beleuchtungsraster möglich; d.h. das in die Fokusebene und in die zur Fokusebene konjugierten Ebene abgebildete Raster besteht nicht aus hellen Lichtpunkten, sondern aus einer hellen Fläche mit einer rasterförmigen Anordnung von kleinen dunklen Zonen. Ein derartiges Beleuchtungsraster, welches z.B. aus einer von der Lichtquelle beleuchteten Schicht mit lichtundurchlässigen Zonen besteht, liefert bei einem CCD-Empfänger mit kleinen lichtempfindlichen Bereichen, auf welche die dunklen Zonen abgebildet werden, ebenfalls Intensitätsminima für diejenigen Objektstellen deren reflektierende Flächen genau in der Fokusebene liegen.

In einer anderen vorteilhaften Ausführungsform wird das Beleuchtungsraster durch ein Linsen-Array erzeugt, welches eine annähernd punktförmige Lichtquelle vielfach in rasterförmiger Anordnung in eine Beleuchtungsebene abbildet.

In einer weiteren vorteilhaften Ausführungsform wird das Beleuchtungsraster dadurch erzeugt, daß eine von einer Lichtquelle beleuchtete Blende vielfach in rasterförmiger Anordnung in eine Beleuchtungsebene abgebildet wird. Auch in diesem Fall kann ein inverses Beleuchtungsraster z.B. dadurch realisiert werden, daß die Blende ein lichtundurchlässiges Zentrum hat.

In einer besonders vorteilhaften Ausführungsform wird das Beleuchtungsraster durch ein Lichtquellen-Array erzeugt. Dieses kann z.B. aus einzelnen Leuchtdioden zusammengesetzt sein oder in integrierter Technik hergestellt werden. In beiden Fällen ist es ganz besonders vorteilhaft, die Arrays und ihre Spannungsversorgung so auszubilden, daß entweder jede einzelne Lichtquelle oder bestimmte Teilmengen der Lichtquellen unabhängig von den anderen ein- und ausgeschaltet werden können. Das Beleuchtungsrastermaß ist dann variierbar und es sind unterschiedliche Tiefenauflösungen einstellbar.

Ein variierbares Beleuchtungsraster ist auch dadurch realisierbar, daß die Transmission von Teilbereichen des Beleuchtungsrasters variierbar ist. Dazu kann das Beleuchtungsraster eine von hinten beleuchtete Flüssigkristallmatrix sein.

Zur Aufnahme der oben erläuterten höhenselektiven übersichtsbilder ist es zweckmäßig, eine Verstellvorrichtung vorzusehen, welche es erlaubt die Fokusebene mit den Bildern der Lichtpunkte auf verschiedene Schichtebenen des Objektes einzustellen.

Zur Aufnahme vollständiger Reflexionsprofile mit guter Auflösung ist es zweckmäßig, eine Verstellvorrichtung vorzusehen, welche es erlaubt, das Beleuchtungsraster und das Objekt relativ zueinander in Ebenen senkrecht zur optischen Achse zu bewegen, so daß das Objekt mit dem Beleuchtungsraster abgescannt wird. Die Relativbewegung zwischen Lichtpunkten und Objekt kann dabei innerhalb des Abstandes benachbarter Lichtpunkte bleiben oder auch ein Vielfaches davon betragen. Bei der Verwendung variierbarer Beleuchtungsraster kann ein grobes Abscannen des Objektes auf durch sequentielles Einschalten unterschiedlicher Teilbereiche des Beleuchtungsrasters erfolgen.

In einer weiteren vorteilhaften Ausgestaltung der Erfindung ist der CCD-Empfänger mit einem Computer verbunden, der die Signale des CCD-Empfängers auswertet. Es ist in diesem Fall vorteilhaft, die Verstellvorrichtungen für die relative Bewegung von Lichtpunkten und Objekt zueinander in Richtung der optischen Achse und/oder in den Ebenen der Lichtpunkte bzw. des Objektes durch den Computer zu steuern.

In einer besonders bevorzugten Ausführungsform der Erfindung wird von dem Computer außerdem eine Schaltvorrichtung gesteuert, die unterschiedliche Teilmengen der Lichtquellen des Lichtquellen-Arrays ein- und ausschaltet, bzw. die Transmission unterschiedlicher Teilbereiche des Beleuchtungsrasters variiert. Dabei kann z.B. die Anzahl der eingeschalteten Lichtquellen von den Ergebnissen der Auswertung des Computers gesteuert werden, so daß in kritischen Bereichen eines Objektes der Streulichtanteil durch eine Verminderung der Anzahl der wirksamen Lichtquellen gesenkt werden kann.

Beim Abscannen eines Objektes kann es vorteilhaft sein, Beleuchtungsraster und CCD-Empfänger relativ zueinander in der Beleuchtungsebene bzw. in der Blendenebene durch eine Schalt- oder
Verstellvorrichtung, die zweckmäßigerweise vom Computer gesteuert wird, reell oder virtuell zu verschieben. Mit einem leistungsfähigen Computer können durch diese Verschiebung zusätzliche Informationen gewonnen werden, die eine genauere Auswertung ermöglichen. In diesem Fall sollte das Rastermaß des Beleuchtungsrasters größer sein als das Rastermaß der lichtempfindlichen Bereiche des CCD-Empfängers.

Eine virtuelle Verschiebung von Beleuchtungsraster und Detektorraster läßt sich beispielsweise dadurch realisieren, daß zwischen dem Beleuchtungsraster und dem Detektorraster eine planparallele Platte angeordnet ist, die um eine senkrecht zur optischen Achse liegende Achse schwenkbar ist. Bei dem Ausführungsbeispiel mit Linsenarray können auch zwei Lichtquellen nebeneinander angeordnet sein. Die virtuelle Verschiebung erfolgt dann durch Umschalten zwischen den Lichtquellen.

Die Verschiebung von Beleuchtungs- und Beobachtungsraster ermöglicht einen periodischen Wechsel zwischen dem Justagezustand, in dem die Lichtpunkte auf lichtempfindliche Bereiche abgebildet sind und dem Justagezustand, in dem die Lichtpunkte auf lichtunempfindliche Zwischenräume des Detektorrasters abgebildet sind. Durch pixelweise Differenzbildung zweier in den unterschiedlichen Justagezuständen aufgezeichneter Bilder im Computer läßt sich dann der konfokale Effekt verstärken, da die Differenz in den fokussierten Bereichen besonders groß und in den defokussierten Objektbereichen besonders klein ist.

Für eine möglichst geringe Tiefenschärfe der konfokalen Abbildung ist es vorteilhaft, an Stelle der üblichen kreisförmigen Telezentrie-Blende eine ringförmige Blende vorzusehen. Die Anwendung einer derartigen Blende ist aus der EP-A2-0 244 640 bekannt. Dort sind auch Blenden mit anderen Transmissionsmustern (pattern) beschrieben, die auch für das vorliegende optische Abbildungssystem geeignet sind, um die dreidimensionale Übertragungsfunktion an vorbekannte Objektmuster anzupassen.

Die Erfindung wird im folgenden anhand von in den Figuren 1 bis 8 dargestellten Ausführungsbeispielen näher erläutert. Dabei zeigen:
- Fig. 1: eine Ausführung, bei der das Beleuchtungsraster durch eine beleuchtete Schicht mit Löchern erzeugt wird,
- Fig. 2: eine Ausführung, bei der die Ausleuchtung der Löcher durch ein zusätzliches Linsen-Array verbessert wird,
- Fig. 3: eine Ausführung, bei der das Beleuchtungsraster durch ein Halbleiter-Array erzeugt wird,
- Fig. 4: eine Glasplatte mit einem Muster für ein inverses Beleuchtungsraster,
- Fig. 5: eine Anordnung zur Erzeugung eines Beleuchtungsrasters durch vielfache Abbildung einer Lichtquelle mit einem Linsen-Array,
- Fig. 6: eine Anordnung zur Erzeugung eines Beleuchtungsrasters durch vielfache Abbildung einer beleuchteten Blende mit einem Linsen-Array,
- Fig. 7: ein Beispiel für die beleuchtete Blende in Figur 6 und
- Fig. 8: eine Anordnung mit einer Flüssigkristallmatrix als Beleuchtungsraster im Durchlicht.

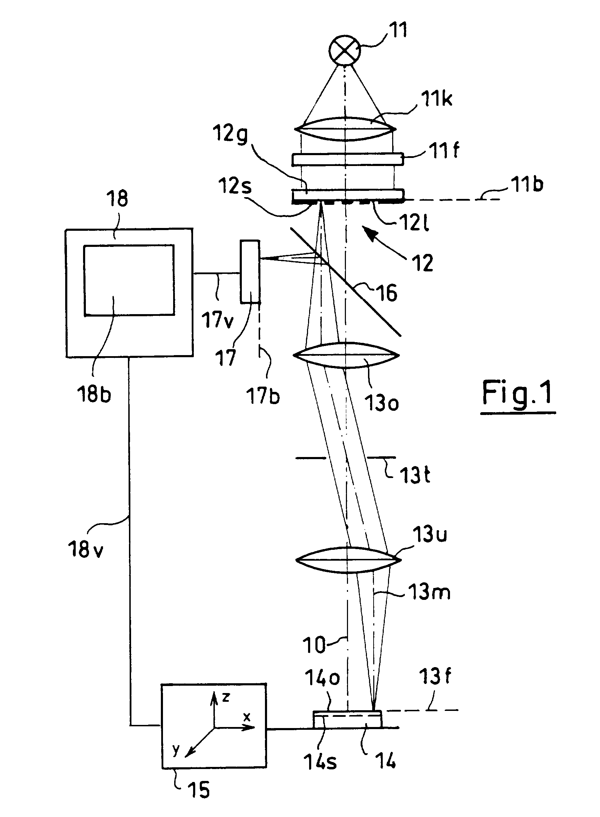

In Fig. 1 ist mit (11) eine Lichtquelle, z.B. eine Halogenlampe, bezeichnet, die mit Hilfe des Kondensors (11k), evtl. über ein Filter (11f) (zur Aussonderung eines ausreichend schmalen Spektralbereiches), Löcher (12l) in einer Schicht (12s) beleuchtet. Eine derartige Schicht kann in bekannter Weise z.B. aus Chrom auf einer Glasplatte (12g) hergestellt werden. Die Löcher (12l) sind in der Schicht (12s) ebenso rasterförmig angeordnet wie die lichtempfindlichen Bereiche des CCD-Empfängers (17). Wird z.B. der Empfänger 1 CX 022 der Fa. Sony verwendet, dann enthält die Schicht 512 x 512 Löcher mit einem Abstand von 11 µm in beiden Richtungen des Rasters und mit einer Lochgröße von z.B. 2 µm x 2µm. Die Größe der Löcher ist also erheblich kleiner als ihr Abstand.

Das durch die beleuchteten Löcher (12l) in der Schicht (12s) erzeugte Beleuchtungsraster liegt in der Beleuchtungsebene (11b). Diese wird durch die Linsen ( 13o, 13u) in die Fokusebene (13f) abgebildet, so daß in letzterer das Objekt (14) mit rasterförmig angeordneten Lichtpunkten beleuchtet wird. Der Abstand der Lichtpunkte von Mitte zu Mitte wird als Beleuchtungsrastermaß bezeichnet. Bei nichttransparenten Objekten kann nur die Oberfläche (14o) beleuchtet werden, während bei transparenten Objekten auch Schichten (14s) im Inneren mit den Lichtpunkten beleuchtet werden können. Die vom Objekt in der Fokusebene (13f) reflektierten Lichtstrahlen werden von den Linsen (13u, 13o) über einen Strahlteiler (16) in der Blendenebene (17b) fokussiert. Die für eine konfokale Anordnung notwendigen Blenden werden in der Blendenebene (17b) realisiert durch die lichtempfindlichen Bereiche des CCD-Empfängers (17), die durch Zwischenräume voneinander getrennt sind, die größer sind als die lichtempfindlichen Bereiche.

Zwischen den Linsen (13o, 13u) ist üblicherweise eine sog. Telezentrie-Blende (13t) angeordnet, welche dafür sorgt, daß der Mittenstrahl (13m) parallel zur optischen Achse (10) auf das Objekt (14) trifft, so daß die Lage der Lichtpunkte auf dem Objekt sich nicht ändert, wenn das Objekt (14) in Richtung der optischen Achse (10) bewegt wird.

Das Objekt (14) kann durch eine Verstellvorrichtung (15) in allen 3 Raumrichtungen bewegt werden, so daß verschiedene Schichten (14s) des Objektes (14) abgescannt werden können. Dabei kann die Bewegung in x- und y-Richtung kleiner gewählt werden als das Rastermaß der Lichtpunkte (12) bzw. des CCD-Empfängers (17). Selbstverständlich kann die Bewegung des Objektes (14) in z-Richtung auch durch Verschieben der Linsen (130, 13u) in Richtung der optischen Achse (10) erreicht werden und ebenso können anstelle der Bewegung des Objektes in x- und y-Richtung auch die Schicht (12s) mit den Löchern (121) und CCD-Empfänger (17) entsprechend bewegt werden.

Die Signale des CCD-Empfängers (17) werden über die Verbindungsleitung (17v) in einen Computer (18) übertragen, der die Auswertung übernimmt und auf einem Bildschirm (18b) die Ergebnisse der Auswertung z.B. in Form von graphischen Darstellungen wiedergibt. Der Computer (18) kann auch über die Verbindungsleitung (18v) die Verschiebung der Fokusebene (13f) im Objekt und das Scannen in x- und y-Richtung steuern. Diese Steuerung kann im Computer als festes Programm vorliegen oder abhängig von den Ergebnissen der Auswertung erfolgen.

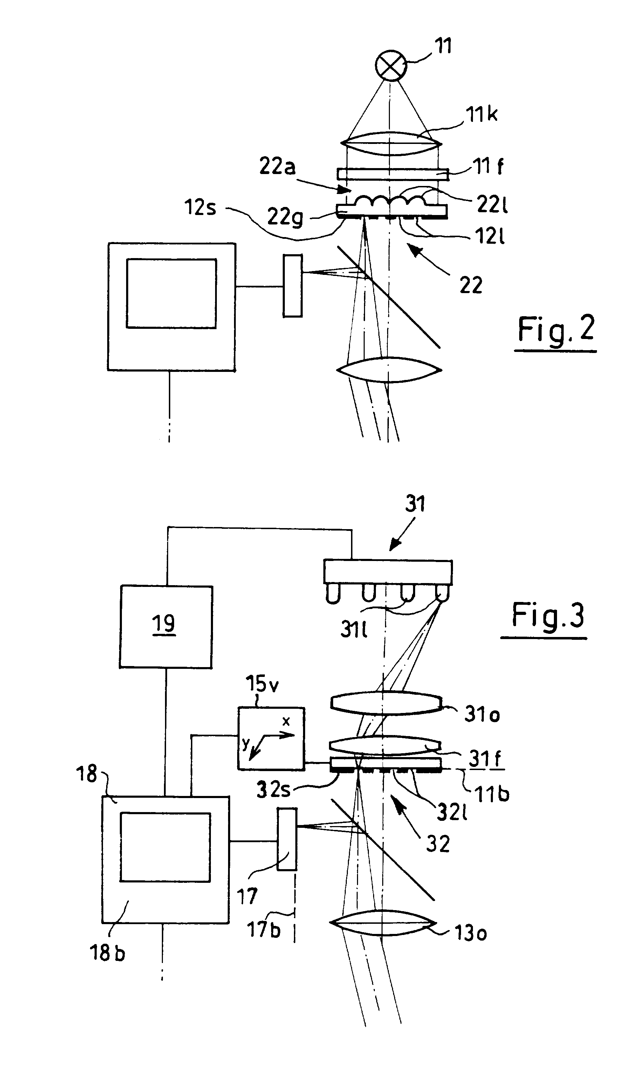

In Figur 2 ist zwischen dem Kondensor (11k) bzw. dem Filter (11f) und der Schicht (12s) mit den Löchern (12l) ein Linsen-Array (22a) angeordnet, welches ebenso viele kleine Linsen (221) enthält wie die Schicht (12s) Löcher (121) hat. Die Linsen (221) haben die Aufgabe, Bilder der Leuchtwendel der Lichtquelle (11) in die Löcher abzubilden und damit den Lichtpunkten eine größere Intensität zu geben.

Das Linsen-Array (22a) und die Schicht (12s) mit den Löchern (12l) können - wie dargestellt - in einem gemeinsamen Teil (22g) vereinigt sein. Die Herstellung geeigneter Linsen-Arrays ist z.B. aus einer Veröffentlichung von K. Koizumi (SPIE Vol. 1128, 74 (1989)) bekannt.

Eine besonders vorteilhafte Realisierung des Beleuchtungsrasters ist in Figur 3 dargestellt. Dort ist mit (31) ein Lichtquellen-Array bezeichnet, welches z.B. aus Lumineszenzdioden (LEDs) (31l) bestehen kann. Ein derartiges Array mit einer Größe von z.B. 10 x 10 Dioden läßt sich z.B. aus handelsüblichen Mini-Dioden LSU260-EO der Fa. Siemens mit einem Abstand der Dioden von 2,5 mm zusammensetzen und hat daher eine Gesamtgröße von 2,5 cm x 2,5 cm. Es wird im Maßstab von ca. 1 : 5 in die Beleuchtungsebene (11b) durch das Objektiv (31o) so abgebildet, daß das Abbild des Beleuchtungsrasters in der Ebene des CCD-Empfängers ungefähr die Größe der gesamten lichtempfindlichen Fläche des CCD-Empfängers von 5 mm x 5 mm erhält. Vom CCD-Empfänger (17) werden in diesem Fall nur 100 lichtempfindliche Bereiche mit einem Abstand von ca. 0,5 mm x 0,5 mm von den insgesamt vorhandenen 512 x 512 Detektorelementen ausgenutzt. Trotzdem ergibt sich durch die 100 Lichtpunkte ein erheblicher Zeitgewinn gegenüber dem Scannen mit nur einem Lichtpunkt.

Auch in diesem Fall kann es vorteilhaft sein, in der Beleuchtungsebene (11b) eine Schicht (32s) mit Löchern (32l) anzuordnen, damit die Lichtpunkte genügend kleine Abmessungen erhalten. Außer dem Objektiv (31o) für die verkleinerte Abbildung ist eine Feldlinse (31f) für die weitere Abbildung im konfokalen Strahlengang zweckmäßig.

Mit einem Piezo-Antrieb (15v) läßt sich die Schicht (32s) senkrecht zur optischen Achse in x- und/oder y-Richtung verschieben, so daß alternierend die Löcher (32l) auf lichtempfindliche Bereiche und auf lichtunempfindliche Zwischenräume der CCD-Kamera (17) abgebildet sind. Im Computer (18) wird dann pixelweise die Differenz der Lichtintensität zweier nacheinander aufgenommener Bilder berechnet. Dadurch läßt sich ein verstärkter konfokaler Effekt erzielen.

Wesentlich vorteilhafter ist es, für das Beleuchtungsraster integrierte LED-Arrays zu verwenden, wie sie z.B. in einer Veröffentlichung von J. P. Donnelly (SPIE 1043, 92 (1989)) beschrieben sind. Auch derartige LED-Arrays haben genauso wie das zusammengesetzte Array aus Mini-Dioden den Vorteil, daß definierte Teilmengen der LEDs ein- und ausgeschaltet werden können. In beiden Fällen kann das Ein- und Ausschalten vom Computer (18) über die Schaltvorrichtung (19) gesteuert werden.

Der in den Figuren 1 bis 3 dargestellte konfokale Strahlengang zwischen Beleuchtungsebene (11b), Fokusebene (13f) und Blendenebene (17b) ist nur eine spezielle Ausführungsform von mehreren bekannten konfokalen Strahlengängen, bei denen die Erfindung in für den Fachmann sofort erkennbarer Weise angewendet werden kann. Außerdem ist auch bei dem dargestellten Strahlengang eine Abbildung der Beleuchtungsebene (11b) in die Fokusebene (13f) im Maßstab 1 : 1 keineswegs notwendig. Vielmehr ist dabei nicht nur - wie von Mikroskopen bekannt- eine Verkleinerung sondern auch eine Vergrößerung möglich, weswegen in der Überschrift auch nicht die Bezeichnung Mikroskop verwendet wurde.

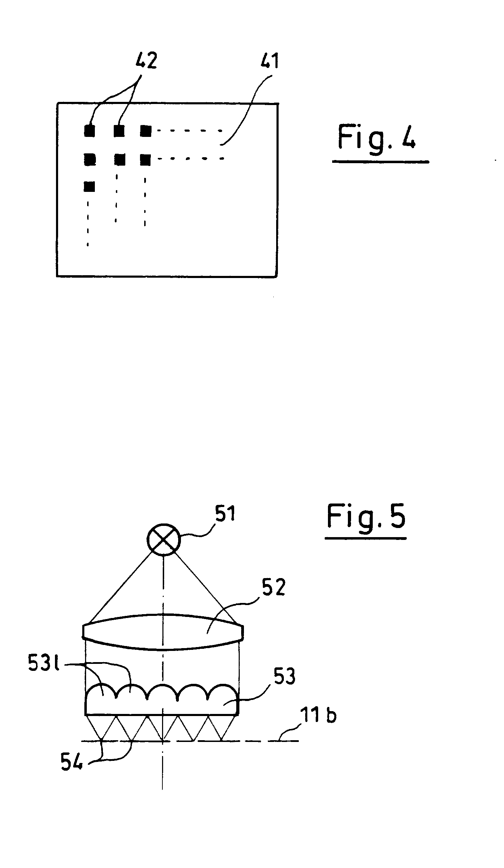

In der Figur 4 ist eine Glasplatte (41) für ein inverses Beleuchtungsraster dargestellt. Hier besteht die auf die Glasplatte aufgebrachte, lichtundurchlässige Schicht nur aus kleinen Zonen (42), welche durch relativ weite, lichtdurchlässige Bereiche voneinander getrennt sind.

In der Figur 5 wird das Beleuchtungsraster durch ein Linsen-Array (53) erzeugt, welches durch ausreichend gute Abbildungseigenschaften von einer nahezu punktförmigen Lichtquelle (51) ausreichend kleine Lichtpunkte (54) in der Beleuchtungsebene (11b) herstellt. Die Kondensorlinse (52) bewirkt, daß das Linsen-Array (53) von einem Parallelbündel durchsetzt wird, so daß jede einzelne Linse (53l) optimal benutzt wird.

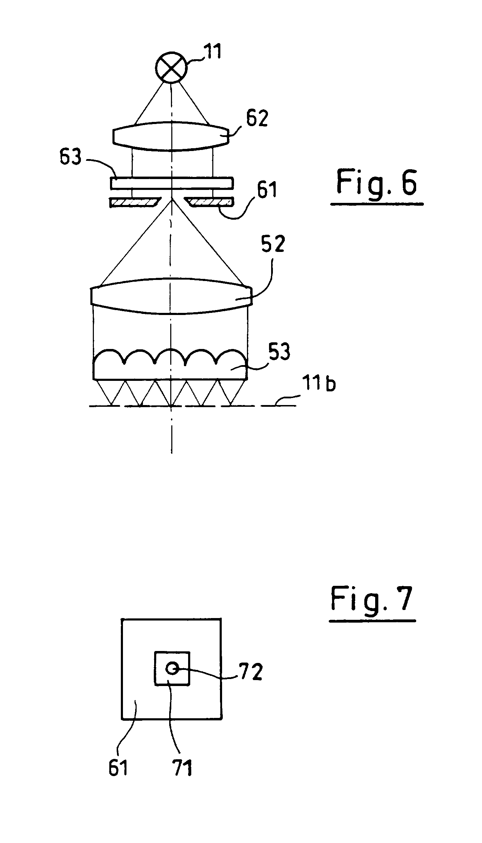

Figur 6 zeigt eine Anordnung bei der durch ein Linsen-Array (53) eine Blende (61) vielfach in die Beleuchtungsebene (11b) abgebildet wird. Diese Blende wird über den Kondensor (62) und die Streuscheibe (63) von der Lichtquelle (11) beleuchtet. Als Blende sind die verschiedensten Ausführungsformen möglich. Als Beispiel zeigt die Figur 7 eine Blende (61) mit quadratischer Begrenzung des lichtdurchlässigen Bereiches (71) und einem lichtundurchlässigen Zentrum (72) für ein inverses Beleuchtungsraster. Natürlich sind auch Blenden für ein Beleuchtungsraster aus Lichtpunkten etc. möglich.

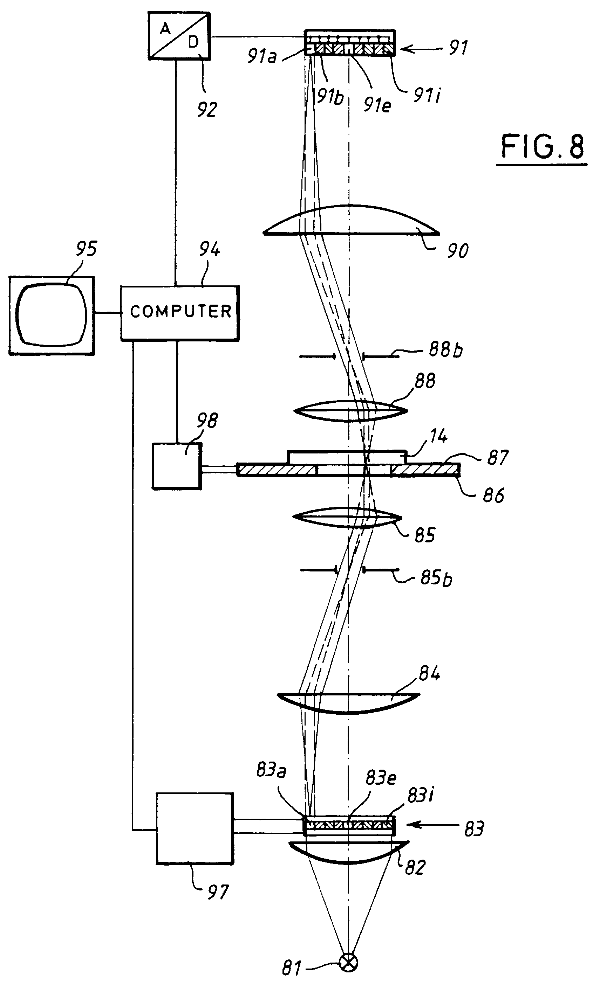

In dem Ausführungsbeispiel nach der Fig. 8 ist ein konfokales Rastermikroskop dargestellt. Es enthält als Beleuchtungsraster ein Flüssigkristalldisplay (83). Die Transmission der Teilbereiche (83a-i) des Flüssigkristalldisplays, von denen hier lediglich neun Teilbereiche dargestellt sind, ist von einer elektronischen Schalteinrichtung (97) adressierbar variierbar.

Das Flüssigkristalldisplay (83) ist rückwärtig von einer Lichtquelle (81) und einem Kollektor (82) beleuchtet. Über eine Zwischenlinse (84) und einem Kondensor (85) ist das Beleuchtungsraster (83) verkleinert in die Fokusebene (87) abgebildet. Als Telezentrieblende dient hier die Eintrittspupille (85b) des Kondensors.

Beobachtungsseitig wird das in der Fokusebene (87) gelegene Bild des Flüssigkristalldisplays über ein Objektiv (88) und eine Tubuslinse (90) telezentrisch auf einen CCD-Empfänger (91) abgebildet. Hier dient die Austrittspupille (88b) des Objektivs (88) als Telezentrie blende.

Die vom CCD-Empfänger (91) aufgenommenen Bilder werden nach Digitalisierung in einem Analog/Digitalwandler in einen Rechner (94) eingelesen und verarbeitet.

In dem dargestellten Fall sind lediglich zwei Teilbereiche (83a, 83e) des Flüssigkristalldisplays (83) auf hohe Transmission geschaltet. Dementsprechend werden in der Fokusebene (87) auch lediglich zwei Leuchtflecken erzeugt und lediglich die beiden Detektorelemente (91a, 91e) die den beiden Teilbereichen (83a, 83e) abbildungsmäßig zugeordnet sind, empfangen in der Fokusebene (87) gestreutes Licht. Die verbleibenden Detektorelemente (91b-d, 91f-i) wirken als konfokale Blenden, indem ihre Signale bei der Bildauswertung nicht oder gesondert berücksichtigt werden.

Das Objekt (14) kann nun in der Fokusebene (87) dadurch abgetastet werden, daß nacheinander unterschiedliche Teilbereiche (83a-i) des Flüssigkristalldisplays (83) oder unterschiedliche Kombinationen der Teilbereiche (83a-i) auf hohe Transmission geschaltet werden und jeweils die Signale der den eingeschalteten Teilbereichen (83a-i) zugeordneten Detektorelemente (91a-i) bei der Auswertung berücksichtigt werden. Für diese adressierbare Ansteuerung der Teilbereiche (83a-i) ist der Computer (94) mit der Schalteinrichtung (97) verbunden. Das anschließend aus mehreren Einzelbildern zusammengesetzte Gesamtbild wird dann auf einem Monitor (95) dargestellt.

Desweiteren ist der Objekttisch (86) über eine Steuereinrichtung (98), die selbst wiederum vom Computer (94) angesteuert wird, in den drei zueinander senkrechten Raumrichtungen verschiebbar. Durch feine Verschiebung des Objekttisches (86) parallel zur Fokusebene (87) lassen sich Bilder mit sehr hoher latenter Auflösung aufzeichnen. Die Verschiebung des Objekttisches (86) parallel zur optischen Achse dient zur Aufnahme von unterschiedlichen Tiefenschnitten des Objektes (14).

Bei diesem Ausführungsbeispiel ist lediglich das Detektorrastermaß, d.h. die Mittenabstände der Detektorelemente (91a-i) fest. Dagegen ist das Beleuchtungsrastermaß in der Fokusebene über den Computer (94) und die Schaltvorrichtung (97) variierbar und hängt davon ab, wie viele Teilbereiche (83a-i) des Displays (83) gleichzeitig auf hohe Transmission geschaltet sind. Daher ist auch die konfokale Wirkung entsprechend den gegebenen Meßanforderungen variierbar. So können beispielsweise zur Erzeugung von übersichtsbildern alle Teilbereiche (83a-i) auf hohe Transmission geschaltet sein. Das vom CCD-Sensor (91) aufgenommene Bild entspricht dann einem normalen Hellfeldbild. Es ist jedoch auch möglich, unterschiedliche Abstände der auf hohe Transmission geschalteten Teilbereiche (83a-i) einzustellen. In diesem Fall variiert die konfokale Wirkung innerhalb des Bildfeldes.

In der Fig. 8 wurden aus Gründen der Übersichtlichkeit lediglich neun Teilbereiche (83a-i) des Displays und neun zugeordnete Detektorelemente (91a-i) dargestellt. Es ist klar, daß sowohl das Display als auch der Empfänger (91) wesentlich mehr, zweidimensional angeordnete Teilbereiche bzw. Detektorelemente aufweisen kann.

Bei den anhand der Zeichnungen beschriebenen Ausführungsbeispielen hat das Licht beleuchtungs- und beobachtungsseitig stets dieselbe Wellenlänge. Die erfindungsgemäße Vorrichtung kann jedoch auch für Fluoreszenzmessungen vorteilhaft eingesetzt werden. Dafür können beispielsweise vor dem Detektorraster entsprechende Farbfilter eingesetzt sein, die lediglich das Fluoreszenzlicht des Objektes transmittieren lassen und das auf das Objekt projizierte Licht sperren.

## Patentansprüche

1. Vorrichtung zum dreidimensionalen optischen Abtasten eines Objektes (14)
mit einem Beleuchtungsraster (12; 22; 31; 83) bestehend aus Beleuchtungsrasterelementen, die gleichzeitig mehrere getrennte Leuchtflecken erzeugen,
einem Detektorraster (17; 91), das aus einer Vielzahl unabhängiger Detektorelemente besteht, deren Mittelpunkts-Abstände ein Detektorrastermaß darstellen,
sowie optischen Elementen (13u, 13o) zur Abbildung des Beleuchtungsrasters in eine Fokusebene (13f; 87) und zur Abbildung der Fokusebene auf das Detektorraster,
wobei die Mittelpunkts-Abstände der in die Fokusebene (13f; 87) abgebildeten Beleuchtungsrasterelemente ein Beleuchtungsrastermaß darstellen und
wobei das Detektorrastermaß größer als die Durchmesser bzw. Kantenlängen der lichtempfindlichen Flächen der einzelnen Detektorelemente ist,
dadurch gekennzeichnet,
daß jedem Beleuchtungsrasterelement jeweils ein Detektorelement zugeordnet ist, wobei die lichtunempfindlichen Bereiche zwischen den Detektorelementen als konfokale Blenden wirken.

2. Vorrichtung zum dreidimensionalen optischen Abtasten eines Objektes (14)
mit einem Beleuchtungsraster (12; 22; 31; 83) bestehend aus Beleuchtungsrasterelementen, die gleichzeitig mehrere getrennte Leuchtflecken erzeugen,
einem Detektorraster (17; 91), das aus einer Vielzahl unabhängiger Detektorelemente besteht, deren Mittelpunkts-Abstände ein Detektorrastermaß darstellen,
sowie optischen Elementen (13u, 13o) zur Abbildung des Beleuchtungsrasters in eine Fokusebene (13f; 87) und zur Abbildung der Fokusebene auf das Detektorraster,
wobei die Mittelpunkts-Abstände der in die Fokusebene (13f; 87) abgebildeten Beleuchtungsrasterelemente ein Beleuchtungsrastermaß darstellen und
wobei das Detektorrastermaß größer als die Durchmesser bzw. Kantenlängen der lichtempfindlichen Flächen der einzelnen Detektorelemente ist,
dadurch gekennzeichnet,
daß das Detektorrastermaß kleiner als das Abbild des Beleuchtungsrastermaßes in der Ebene des Detektorrasters ist und
daß Mittel (18; 94) vorgesehen sind, die jeweils nur die Signale derjenigen Detektorelemente berücksichtigen, denen jeweils ein Beleuchtungsrasterelement zugeordnet ist, wobei die nicht berücksichtigten Detektorelemente als konfokale Blenden wirken.

3. Vorrichtung nach einem der Ansprüche 1 oder 2, gekennzeichnet durch ein inverses Beleuchtungsraster, wobei die Beleuchtungsrasterelemente eine helle Fläche mit getrennten dunklen Zonen erzeugen.

4. Vorrichtung nach Anspruch 1, 2 oder 3, dadurch gekennzeichnet, daß das Detektorrastermaß mindestens dem zweifachen des Durchmessers bzw. Kantenlänge der lichtempfindlichen Flächen der einzelnen Detektorelemente entspricht.

5. Vorrichtung nach einem der Ansprüche 1 bis 4, dadurch gekennzeichnet, daß das Detektorraster ein CCD-Sensor (17; 91) ist.

6. Vorrichtung nach einem der Ansprüche 2 bis 5, dadurch gekennzeichnet, daß das Abbild des Beleuchtungsrastermaßes in der Ebene des Detektorrasters (17; 91) mindestens dem zweifachen des Detektorrastermaßes entspricht.

7. Vorrichtung nach einem der Ansprüche 1 bis 6, dadurch gekennzeichnet, daß das Beleuchtungsraster (12) aus von einer Lichtquelle (11) beleuchteten Löchern (12l) in einer Schicht (12s) besteht.

8. Vorrichtung nach Anspruch 7, dadurch gekennzeichnet, daß für die Beleuchtung der Löcher (12l) ein Linsen-Array (22a) vorgesehen ist.

9. Vorrichtung nach einem der Ansprüche 1 bis 6, dadurch gekennzeichnet, daß das Beleuchtungsraster aus einer von einer Lichtquelle (11) beleuchteten Schicht mit lichtundurchlässigen Zonen (42) besteht.

10. Vorrichtung nach einem der Ansprüche 1 bis 6, dadurch gekennzeichnet, daß das Beleuchtungsraster durch ein Linsen-Array (53), welches eine Lichtquelle (51) vielfach in rasterförmiger Anordnung in eine Beleuchtungsebene (11b) abbildet, erzeugt ist.

11. Vorrichtung nach einem der Ansprüche 1 bis 6, dadurch gekennzeichnet, daß das Beleuchtungsraster durch ein Linsen-Array (53), welches eine von einer Lichtquelle (11) beleuchtete Blende (61) vielfach in rasterförmiger Anordnung in eine Beleuchtungsebene (11b) abbildet, erzeugt ist.

12. Vorrichtung nach Anspruch 11, dadurch gekennzeichnet, daß die Blende (61) ein lichtundurchlässiges Zentrum (72) hat.

13. Vorrichtung nach einem der Ansprüche 1 bis 6, dadurch gekennzeichnet, daß das Beleuchtungsrastermaß variierbar ist.

14. Vorrichtung nach Anspruch 13, dadurch gekennzeichnet, daß das Beleuchtungsraster ein Lichtquellen-Array (31) enthält.

15. Vorrichtung nach Anspruch 14, dadurch gekennzeichnet, daß die Lichtquellen (31l) des Lichtquellen-Arrays (31a) einzeln oder in Teilmengen ein- und ausschaltbar sind.

16. Vorrichtung nach Anspruch 13, dadurch gekennzeichnet, daß die Transmission von Teilbereichen (83a-i) des Beleuchtungsrasters (83) einzeln oder in Teilmengen variierbar ist.

17. Vorrichtung nach einem der Ansprüche 13 bis 16, dadurch gekennzeichnet, daß eine elektronische Schaltvorrichtung (19; 97) zur Variation des Beleuchtungsrastermaßes vorgesehen ist.

18. Vorrichtung nach einem der Ansprüche 1 bis 17, dadurch gekennzeichnet, daß durch eine Verstellvorrichtung (15; 98) die Fokusebene (13f) auf verschiedene Schichten (14s) des Objektes (14) einstellbar ist und/oder das Beleuchtungsraster (12; 22; 31; 83) und das Objekt (14) relativ zueinander in Ebenen senkrecht zur optischen Achse (10) bewegbar sind.

19. Vorrichtung nach einem der Ansprüche 1 bis 18, dadurch gekennzeichnet, daß das Detektorraster (17; 91) mit einem Computer (18; 94) verbunden ist, in dem die Signale des Detektorrasters (17; 91) ausgewertet werden.

20. Vorrichtung nach Anspruch 19, dadurch gekennzeichnet, daß der Computer (18; 94) mit einer Verstellvorrichtung (15; 98) verbunden ist, durch welche die Einstellung der Fokusebene (13f; 87) auf verschiedene Schichten (14s) des Objektes (14) und/oder die Bewegung von Beleuchtungsraster (12; 22; 31; 83) und Objekt (14) relativ zueinander durch den Computer (18; 94) steuerbar ist.

21. Vorrichtung nach Anspruch 19 oder 20, dadurch gekennzeichnet, daß der Computer (18; 94) mit der Schaltvorrichtung (19; 97) verbunden ist, durch welche die Lichtquellen (311; 83a-i) des Lichtquellen-Arrays (31a; 83) einzeln oder in Teilmengen abhängig von den Ergebnissen der Auswertung des Computers durch den Computer (18; 94) ein- und ausschaltbar sind.

22. Vorrichtung nach einem der Ansprüche 19 bis 21, dadurch gekennzeichnet, daß der Computer (18) mit einer Schalt- oder Verstellvorrichtung (15v) verbunden ist, durch welche das Beleuchtungsraster (12; 22; 31) und das Detektorraster (17) relativ zueinander in ihrer jeweiligen Ebene verschiebbar sind.

23. Vorrichtung nach einem der Ansprüche 1 bis 22, dadurch gekennzeichnet, daß im konfokalen Strahlengang eine Telezentrie-Blende (13t) vorgesehen ist, die ringförmig ausgebildet ist und/oder ein Transmissionsmuster hat.

## Claims

1. Apparatus for the three dimensional optical scanning of an object (14)
- with an illumination grid (12; 22; 31;83) comprising illumination grid elements which simultaneously generate several separated light spots,
- a detector grid (17; 91) comprising a plurality independent detector elements the center to center distances of which constitute a detector grid size,
- and optical elements (13u, 13o) for imaging the illumination grid into a focal plane (13f, 87) and for imaging the focal plane onto the detector grid,
- wherein the center to center distances of the illumination grid elements imaged into the focal plane (13f, 87) constitute an illumination grid size, and
- wherein the detector grid size is larger than the diameter and/or the edge lengths of the photosensitive surfaces of the individual detector elements,
characterized in that a detector element is assigned to each of the illumination grid elements, whereby the light-insensitive regions between the detector elements act as confocal diaphragms.

2. Apparatus for the three dimensional optical scanning of an object (14),
- with an illumination grid (12 ; 22; 31; 83) comprising illumination grid elements which simultaneously generate several separated light spots,
- a detector grid (17; 91) comprising a plurality independente detector elements the center to center distances of which constitute a detector grid size,
- and optical elements (13u; 13o) for imaging the illumination grid into a focal plane (13f; 87) and for imaging the focal plane onto the detector grid,
- whereby the center to center distances of the illumination grid elements imaged into the focal plane (13f, 87) constitute an illumination grid size and
- whereby the detector grid size is larger than the diameter and/or the edge lengths of the photosensitive surfaces of the individual detector elements.
characterized in
- that the detector grid size is smaller than the image of the illumination grid size within the plane of the detector grid and
- that means (18; 94) are provided which take into consideration only the signals of such detector elements to which a respective illumination grid element is assigned, whereby the non-considered detector elements act as confocal diaphragms.

3. Apparatus of claim 1 or claim 2, characterized in an inverted illumination grid, whereby the illumination grid elements generate a bright surface comprising separated dark regions.

4. Apparatus of claim 1, 2 or 3, characterized in that the detector grid size corresponds to at least twice the diameter and/or edge length of the photosensitive surfaces of the individual detector elements.

5. Apparatus of one of the claims 1 to 4, characterized in that the detector grid is a CCD sensor (17; 91).

6. Apparatus of one of the claims 2 to 5, characterized in that the image of the illumination grid size in the plane of the detector grid (17; 91) corresponds a least twice the detector grid size.

7. Apparatus of one of the claims 1 to 6, characterized in that the illumination grid (12) consists of holes (12l) in a layer (12s) illuminated by a light source.

8. Apparatus of claim 7, characterized in that a lens array (22a) is provided for illuminating the holes (12l).

9. Apparatus of one of the claims 1 to 6, characterized in that the illumination grid consists of a layer of opaque zones (42) illuminated by a light source (11).

10. Apparatus of one of the claims 1 to 6, characterized in that the illumination grid is generated by a lens array (53) which images a light source (51) multiple times in a grid-shaped manner in an illumination plane (11b).

11. Apparatus of one of the claims 1 to 6, characterized in that the illumination grid is generated by a lens array (53) which images a diaphragm (61) illuminated by a light source (11) multiple times in a grid-shaped manner in an illumination plane (11b).

12. Apparatus of claim 11, characterized in that the diaphragm (61) has an opaque center (72).

13. Apparatus of one of the claims 1-6, characterized in that the illumination grid size is variable.

14. Apparatus of claim 13, characterized in that the illumination grid comprises a light source array (31).

15. Apparatus of claim 14, characterized in that the light sources (31l) of the light source array (31a) are capable of being turned on or off individually or in partial numbers.

16. Apparatus of claim 13, characterized in that the transmission of partial areas (83a-i) of the illumination grid (83) is variable individually or in partial numbers.

17. Apparatus of one of the claims 13-16, characterized in that an electronic switching device (19; 97) is provided for varying the size of the illumination grid size.

18. Apparatus of one of the claims 1-17, characterized in that, by means of an adjusting device (15; 98), the focal plane (13f) is adjustable to various layers (14s) of the object (14) and/or the illumination grid (12; 22; 31; 83) and the object (14) are movable relative to one another in planes perpendicular to the optical axis (10).

19. Apparatus of one of the claims 1-18, characterized in that the detector grid (17; 91) is connected to a computer (18; 94) in which the signals of the detector grid (17; 91) are evaluated.

20. Apparatus of claim 19, characterized in that the computer (18; 94) is connected to an adjusting device (15; 98) by which the adjustment of the focal plane (13f; 87) on various layers (14s) of the object (14) and/or the movement of the illumination grid (12; 22; 31; 83) and the object (14) relative to one another is controllable by the computer (18; 94).

21. Apparatus of claim 19 or 20, characterized in that the computer (18; 94) is connected to a switching device (19; 97) by which the light sources (31l; 83a-i) of the light source array (31a; 83) can be switched on and off individually or in partial numbers, by the computer (18; 94), in dependence on the results of the computer evaluation.

22. Apparatus of one of the claims 19 to 21, characterized in that the computer (18) is connected to a switching or adjusting device (15v) by which the illumination grid (12; 22; 31) and the detector grid (17) are deplaceable relative to one another within their respective planes.

23. Apparatus of one of the claim 1-22, characterized in that a telecentering diaphragm (13t) is provided in the confocal beam path which diaphragm is made annular and/or has a transmission pattern.

## Revendications

1. Dispositif destiné à l'examen tridimensionnel d'un objet (14) comprenant
une trame d'éclairage (12; 22; 31; 83) composée de plusieurs éléments qui projettent simultanément plusieurs taches lumineuses séparées,
une trame de détecteurs (17; 91) composée d'une multitude d'éléments détecteurs distincts dont les centres sont disposés de manière à offrir, par la distance qui les sépare, un écartement de trame donné
et des éléments optiques (13u, 13o) pour la reproduction de la trame d'éclairage dans un plan focal (13f, 87) et pour la reproduction dudit plan focal sur la trame de détecteurs.
où les distances séparant les centres des points correspondant à la reproduction des éléments de la trame d'éclairage dans le plan focal (13f, 87) représentent un écartement donné de la trame d'éclairage et
où l'écartement de la trame de détecteurs est supérieur aux diamètres ou à la longueur des côtés des surfaces photosensibles des différents éléments détecteurs,
caractérisé en ce que
un élément détecteur est associé respectivement à chaque élément de la trame d'éclairage, les zones non photosensibles entre les éléments détecteurs agissant comme diaphragmes confocaux.

2. Dispositif destiné à l'examen tridimensionnel d'un objet (14) comprenant
une trame d'éclairage (12; 22; 31; 83) composée de plusieurs éléments qui produisent simultanément plusieurs taches lumineuses séparées,
une trame de détecteurs (17; 91) composée d'une multitude d'éléments détecteurs distincts dont les centres sont disposés de manière à offrir, par la distance qui les sépare, un écartement de trame donné
et des éléments optiques (13u, 13o) pour la reproduction de la trame d'éclairage dans un plan focal (13f, 87) et pour la reproduction dudit plan focal sur la trame de détecteurs,
où les distances séparant les centres des points correspondant à la reproduction des éléments de la trame d'éclairage dans le plan focal (13f, 87) représentent un écartement donné de la trame d'éclairage et
où l'écartement de la trame de détecteurs est supérieur aux diamètres ou à la longueur des côtés des surfaces photosensibles des différents éléments détecteurs,
caractérisé en ce que
l'écartement de la trame de détecteurs est plus petit que celui de la trame d'éclairage telle qu'elle est reproduite dans le plan de ladite trame de détecteurs et que
des moyens (18; 54) sont prévus qui ne tiennent compte que des signaux provenant respectivement des éléments détecteurs associés à un élément de la trame d'éclairage, les éléments détecteurs non retenus agissant comme des diaphragmes confocaux.

3. Dispositif selon la revendication 1 ou 2, caractérisé par une trame d'éclairage inversée, où les éléments de ladite trame d'éclairage produisent une surface claire présentant des zones sombres séparées.

4. Dispositif selon l'une quelconque des revendications 1 à 3, caractérisé en ce que l'écartement de la trame de détecteurs est au moins le double du diamètre ou de la longueur des côtés de la surface photosensible que présentent les différents éléments détecteurs.

5. Dispositif selon l'une quelconque des revendications 1 à 4, caractérisé en ce que la trame de détecteurs est constituée par un capteur CCD (17; 91).

6. Dispositif selon l'une quelconque des revendications 2 à 5, caractérisé en ce que l'écartement de la trame d'éclairage telle qu'elle est reproduite dans le plan de la trame de détecteurs (17; 91) est au moins le double de l'écartement de ladite trame de détecteurs.

7. Dispositif selon l'une quelconque des revendications 1 à 6, caractérisé en ce que la trame d'éclairage (12) est composée d'une série de trous (12l) pratiqués dans une couche (12s) et éclairés par une source de lumière (11).

8. Dispositif selon la revendication 7, caractérisé en ce qu'une configuration de lentilles (22a) est prévue pour l'éclairage des trous (12l).

9. Dispositif selon l'une quelconque des revendications 1 à 6, caractérisé en ce que la trame d'éclairage est composée d'une couche comprenant des zones opaques (42) et éclairée par une source de lumière (11).

10. Dispositif selon l'une quelconque des revendications 1 à 6, caractérisé en ce que la trame d'éclairage est produite par une configuration de lentilles (53) qui reproduit une source de lumière (51) dans un plan d'éclairage (11b), en la multipliant sous forme de trame.

11. Dispositif selon l'une quelconque des revendications 1 à 6, caractérisé en ce que la trame d'éclairage est produite par une configuration de lentilles (53) qui reproduit un diaphragme (61) éclairé par une source de lumière (11) dans un plan d'éclairage (11b), en le multipliant sous forme de trame.

12. Dispositif selon la revendication 11, caractérisé en ce que le diaphragme (61) présente un centre opaque (72).

13. Dispositif selon l'une quelconque des revendications 1 à 6, caractérisé en ce que l'écartement de la trame d'éclairage est variable.

14. Dispositif selon la revendication 13, caractérisé en ce que la trame d'éclairage comprend une configuration de sources de lumière (31).

15. Dispositif selon la revendication 14, caractérisé en ce que les sources de lumière (31l) de la configuration de sources de lumière (3la) peuvent être mises en et hors circuit individuellement ou par sous-groupes.

16. Dispositif selon la revendication 13, caractérisé en ce que la transmission de zones partielles (83a-i) de la trame d'éclairage (83) est variable individuellement ou par sous-groupes.

17. Dispositif selon l'une quelconque des revendications 13 à 16, caractérisé en ce qu'il est prévu un dispositif de commutation électronique (19; 97) permettant de faire varier l'écartement de la trame d'éclairage.

18. Dispositif selon l'une quelconque des revendications 1 à 17, caractérisé en ce que le plan focal (13f) peut être positionné sur différentes couches (l4s) de l'objet (14) par un dispositif de réglage (15; 98) et ou que la trame d'éclairage (12; 22; 31; 83) et l'objet (14) peuvent être déplacés l'un par rapport à l'autre dans des plans perpendiculaires à l'axe optique (10).

19. Dispositif selon l'une quelconque des revendications 1 à 18, caractérisé en ce que la trame de détecteurs (17; 91) est reliée à un ordinateur (18; 94) assurant l'exploitation des signaux fournis par ladite trame de détecteurs (17; 91).

20. Dispositif selon la revendication 19, caractérisé en ce que l'ordinateur (18; 94) est relié à un dispositif de réglage (15; 98) qui lui permet de positionner le plan focal (13f; 87) sur différentes couches (14s) de l'objet (14) et/ou de commander le mouvement de la trame d'éclairage (12; 22; 31; 83) et de l'objet (14) l'un par rapport à l'autre.

21. Dispositif selon la revendication 19 ou 20, caractérisé en ce que l'ordinateur (18; 94) est relié au dispositif de commutation (18; 97) qui lui permet de mettre les sources de lumière (311; 83a-i) de la configuration de sources de lumière (3la; 83) en et hors circuit individuellement ou par sous-groupes, en fonction des résultats dégagés de son analyse.

22. Dispositif selon l'une quelconque des revendications 19 à 21, caractérisé en ce que l'ordinateur (18) est relié à un dispositif de commutation et de réglage (15v) permettant de déplacer la trame d'éclairage (12; 22; 31) et la trame de détecteurs (17) l'une par rapport à l'autre dans leurs plans respectifs.

23. Dispositif selon l'une quelconque des revendications 1 à 22, caractérisé en ce qu'un diaphragme à action télécentrique (13t) est prévu dans le trajet lumineux confocal, qui a une forme annulaire et ou qui présente une figure de transmission donnée.
